# EUROPEAN PATENT APPLICATION

(11) **EP 1 233 293 A1**
(43) Date of publication of application: **21.08.2002**
(21) Application number: 02003673.7
(22) Date of filing: 18.02.2002
(51) Int. Cl.: G02B 6/38

(54) **Optical connector**

(30) Priority: 19.02.2001 JP 2001041535
(71) Applicant: AUTONETWORKS TECHNOLOGIES, LTD., Nagoya-shi, Aichi (JP); SUMITOMO WIRING SYSTEMS, Ltd., Yokkaichi-shi, Mie (JP); SUMITOMO ELECTRIC INDUSTRIES, LTD., Osaka-shi, Osaka (JP)
(72) Inventor: Asada, Kazuhiro, c/oAutoNetworks Technologies,Ltd., Nagoya-shi, Aichi (JP); Nakura, Yuji, c/o AutoNetworks Technologies,Ltd., Nagoya-shi, Aichi (JP)
(74) Representative: Winter, Brandl, Fürniss, Hübner, Röss, Kaiser, Polte Partnerschaft

(57) **Abstract**

In an optical connector, a substantially tubular ferrule portion is formed integrally with a housing body portion 15 of a substantially square tubular shape, and a protective hood portion of a substantially square tubular shape is formed integrally with the housing body portion in surrounding relation to the ferrule portion. A distal end portion of the ferrule portion is disposed in a sequestered position within the protective hood portion, and a notch is formed in a bottom wall of the protective hood portion, and the distal end portion of the ferrule portion is exposed laterally to the exterior through the notch.

## Description

### BACKGROUND OF THE INVENTION

### 1. Field of the Invention

This invention relates to an optical connector for connecting an optical fiber cord and a photoelectric conversion element together or for connecting optical fiber cords together.

### 2. Description of the Related Art

One conventional optical connector of the type described includes a ferrule for holding an end portion of an optical fiber, and a housing having a protective hood covering the ferrule so as to surround and protect the ferrule, in which the ferrule and the housing are integrated with each other.

On the other hand, there is known the type of connector (as disclosed in JP-A-10-78534) which includes a ferrule for holding an optical fiber, and a housing having a protective hood for protecting the ferrule, in which the ferrule and the housing are separate from each other.

The former one of the above conventional optical connectors has an advantage that the connector is readily manufactured since the ferrule and the housing are formed integrally with each other.

In this optical connector, however, the distal end of the ferrule needs to be projected beyond the distal end of the protective hood so that the end of the optical fiber can be easily processed into a specular surface (mirror surface) at the distal end of the ferrule, resulting in such a problem that the end surface of the optical fiber can not be sufficiently protected at the end of the ferrule.

This will be described in detail. If the distal end of the ferrule is disposed at a sequestered position within the protective hood, the specular processing of the optical fiber end can not be effected easily because the protective hood hinders this processing. Even if the specular processing of the end surface of the optical fiber can be effected, there is encountered a problem that it is difficult to inspect the condition of the end portion of the ferrule (for example, the projection and recession of the optical fiber relative to the distal end of the ferrule, a distortion, a flaw and a crack of the optical fiber, and so on) after this specular processing. Therefore, in the type of connector in which the ferrule and the housing are formed integrally with each other, it is necessary that the distal end of the ferrule should be projected beyond the distal end of the protective hood.

On the other hand, in the latter one of the above conventional optical connectors, the optical fiber is passed through the ferrule, and the specular processing is applied to the end surface of the optical fiber, and the condition of the distal end of the ferrule, subjected to this specular processing, is inspected, and then this ferrule can be mounted in the housing. Therefore, in this optical connector, even if the distal end portion of the ferrule is disposed in a sequestered position within the protective hood, the above specular processing operation will not be affected at all. Therefore, the easiness of the specular processing operation and the sufficient protection of the optical fiber end can be both achieved.

However, this optical connector requires at least two component parts, that is, the ferrule and the housing, and besides it is necessary to combine them together, and therefore there is encountered a problem that the production of this connector is complicated.

### SUMMARY OF THE INVENTION

The present invention has been made to solve the above problem with the related art, and therefore an object of the present invention is to provide an optical connector in which the production is easy, and a specular processing of an optical fiber at an end of a ferrule portion can be effected easily, and an end surface of the optical fiber at the end of the ferrule portion can be sufficiently protected.

In order to achieve the above object, according to the present invention, there is provided An optical connector, comprising:
a housing body portion;
a substantially tubular ferrule portion adapted to receive and hold an end portion of an optical fiber and integrated with and projecting from said housing body portion; and
a protective hood portion of a substantially tubular shape integrated with and projecting from said housing body portion to surround said ferrule portion and to extend beyond a distal end of said ferrule portion;
wherein a notch through which the distal end portion of said ferrule portion is observable from a side of said protective hood portion is formed in a distal end portion of said protective hood portion.

In the above optical connector, preferably, said notch is so shaped as to satisfy a conduction that when a flat member is pressed toward the distal end of said ferrule portion at any angle, said flat member will not abut against said ferrule portion.

In the above optical connector, preferably, said protective hood portion is formed into a substantially square tubular shape, and one side wall of said protective hood portion is notched.

In the above optical connector, preferably, said protective hood portion is formed into a substantially square tubular shape, and opposed two side walls of said protective hood portion are notched.

In the above optical connector, preferably, said protective hood portion is formed into a substantially square tubular shape, and four side walls of said protective hood portion except for four corner portions are notched.

Also, according to the present invention, there is provided an optical connector, comprising:
a housing body portion;
a plurality of substantially tubular ferrule portions, each being integrated with said housing body portion for receiving and holding an end portion of an optical fiber;
a protective hood portion of a substantially tubular shape integrated with and projecting from said housing body portion so as to surround said plurality of ferrule portions; and extending beyond distal ends of said ferrule portions;
wherein a notch, through which the distal end portions of said ferrule portions can be observed from the side, is formed in a distal end portion of said protective hood portion.

In the above optical connector, preferably, a partition wall is integrated with said housing body portion, and separates said ferrule portions from each other.

In the above optical connector, preferably, said optical connector is adapted to be connected to a mating optical connector which contains a photoelectric conversion element, and is mounted on a predetermined mounting board, and at least that side wall of said protective hood portion, which is to be opposed to said mounting board when said optical connector is connected to said mating optical connector, is notched.

In the above optical connector, preferably, said optical connector is adapted to be fitted in a mating optical connector, and outwardly-projecting, elongate projections are formed respectively at those portions of said protective hood portion, respectively defining opposite side edges of said notch, and extend in a direction of insertion of said optical connector into said mating optical connector.

### BRIEF DESCRIPTION OF THE DRAWINGS

Fig. 1 is a perspective view showing a first embodiment of an optical connector of the present invention;
Fig. 2A is a plan view of the above optical connector, Fig. 2B is a front-elevational view of the optical connector, Fig. 2C is a side-elevational view of the optical connector, Fig. 2D is a rear view of the optical connector, and Fig. 2E is a bottom view of the optical connector;
Fig. 3 is a cross-sectional view of the above optical connector;
Fig. 4 is a perspective view showing a process of applying a specular processing to an end surface of an optical fiber;
Fig. 5 is a perspective view of a first modified optical connector;
Fig. 6 is a cross-sectional view of this optical connector of Fig. 5;
Fig. 7 is a perspective view of a second modified optical connector;
Fig. 8 is a cross-sectional view of this optical connector of Fig. 7;
Fig. 9 is a perspective view of a third modified optical connector;
Fig. 10 is a cross-sectional view of this optical connector of Fig. 9;
Fig. 11 is a perspective view of a fourth modified optical connector;
Fig. 12 is a perspective view of a fifth modified optical connector;
Fig. 13 is a perspective view showing a second embodiment of an optical connector of the invention;
Fig. 14 is a bottom view of this optical connector;
Fig. 15 is a front-elevational view of this optical connector;
Fig. 16 is a cross-sectional view of this optical connector;
Fig. 17 is a perspective view showing a modified optical connector of the second embodiment; and
Fig. 18 is a perspective view showing an optical connector to which this modified optical connector is to be connected.

### DETAILED DESCRIPTION OF THE PREFERRED EMBODIMENTS

Now, a description will be given in more detail of preferred embodiments of the present invention with reference to the accompanying drawings.

### (First Embodiment)

A first embodiment of the present invention will be described with reference to the accompanying drawings.

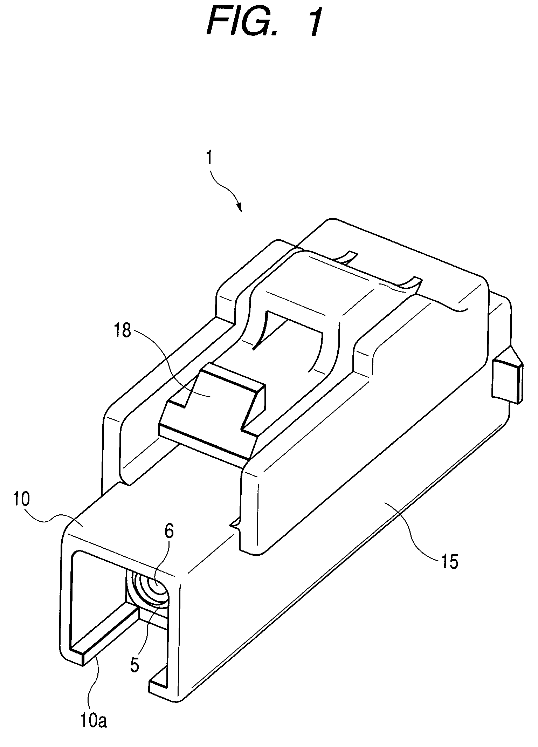

As shown in Figs. 1 to 3, a optical connector 1 is made of a resin or the like, and includes a ferrule portion 5 for receiving and holding an end portion of an optical fiber 61, exposed at an end portion of an optical fiber cord 60, and a protective hood portion 10 provided in surrounding relation to this ferrule portion 5, and the ferrule portion 5 and the protective hood portion 10 are formed integrally with a housing body portion 15.

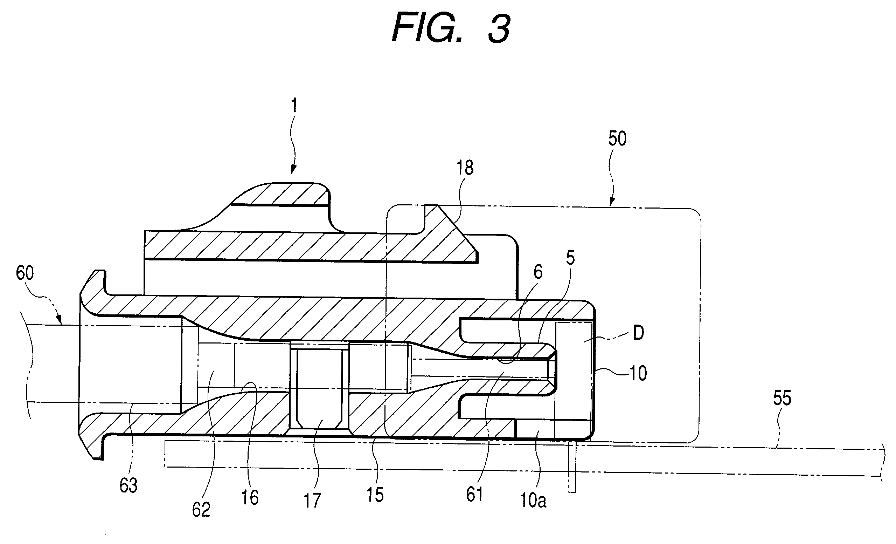

The housing body portion 15 is formed into a substantially square tubular shape, and has a receiving hole portion 16 formed therein along an axis thereof (see Fig. 3).

The optical fiber cord 60, inserted and held in the receiving hole portion 16 in a positioned condition, comprises the optical fiber 61, comprising a core and a clad, a first covering portion 62, and a second covering portion 63, the first and second covering portions 62 and 63 being formed or coated on an outer periphery of the optical fiber 61, as indicated in dots-and-dash lines in Fig. 3. The second covering portion 63 is removed over a predetermined length from the end portion of the optical fiber cord 60 to expose the first covering portion 62, and further the first covering portion 62 is removed over a predetermined length from a distal end portion of the second covering portion-removed portion of the optical fiber cord 60 to expose the optical fiber 61.

The receiving hole portion 16 is formed into such a hole shape as to receive the covering portions of the first and second covering portions 62 and 63 at the end portion of the optical fiber cord 60, and when the end portion of the optical fiber cord 60 is inserted into the receiving hole portion 16 from the rear end thereof, the covering portions of the first and second covering portions 62 and 63 are received and disposed in the receiving hole portion 16.

A positioning hole 17 is formed in a bottom portion of the housing body portion 15, and when a positioning member (not shown) is inserted into the receiving hole portion 16 through this positioning hole 17, and is brought into biting engagement with the first covering portion 62 of the optical fiber cord 60, the optical fiber cord 60 is held and positioned in its axial direction within the receiving hole portion 16.

An engagement portion 18 for engagement with an engaging portion (not shown), formed on a mating optical connector 50, is formed on an upper surface of the housing body portion 15, and when the optical connector 1 is connected to the mating optical connector 50, the engagement portion 18 is engaged with the engaging portion, thereby holding the optical connectors 1 and 50 in the connected condition.

The ferrule portion 5 is formed integrally with the housing body portion 15, and projects from the front end of the housing body portion 15. The ferrule portion 5 is formed into a substantially cylindrical shape, and an optical fiber passage hole portion 6, having an inner diameter substantially equal to the outer diameter of the optical fiber 61, is formed in this ferrule portion, and is disposed on a line of extension of the receiving hole portion 16, and extends from the front end of the receiving hole portion 16. When the optical fiber cord 60 is inserted into the receiving hole portion 16 from the rear end thereof, the exposed end portion of the optical fiber 61 at the distal end portion of the optical fiber cord is inserted and located in the optical fiber passage hole portion 6, and the exposed end portion of the optical fiber 61 is received and held in the optical fiber passage hole portion 6 in such a manner that it is positioned in its radial direction. The exposed end portion of the optical fiber 61, thus received and held in the ferrule portion 5, is subjected to a specular processing as described later. Then, when the optical connector 1 is connected to the mating optical connector 50, the end surface of the optical fiber 61 is disposed in opposed relation to a light-receiving surface, a light-emitting surface or the like of a photoelectric conversion element D (a light-receiving element or a light-emitting element) received and held in the mating optical connector 50, so that the optical fiber and the photoelectric conversion element are optically coupled together.

The protective hood portion 10 has a substantially tubular shape, and extends beyond the distal end of the ferrule portion 5 in surrounding relation thereto, and projects from the front end of the housing body portion 15, and is formed integrally with this housing body portion 15.

The protective hood portion 10 thus extends beyond the distal end of the ferrule portion 5 so that when the ferrule portion 5 is pressed toward a predetermined flat surface while kept in a posture perpendicular to this flat surface, the protective hood portion 10 can abut against this flat surface, thereby preventing the distal end of the ferrule portion 5 from abutting against this flat surface.

A notch of a predetermined shape is formed in part of the distal end portion of the protective hood portion 10.

This notch need to have such a shape that the distal end portion of the ferrule portion 5 can be observed through this notch at least from the side. Preferably, this notch is so formed as to satisfy such conditions that when a flat member is pressed toward the distal end of the ferrule portion 5 at any angle, this flat member will not abut against the ferrule portion 5.

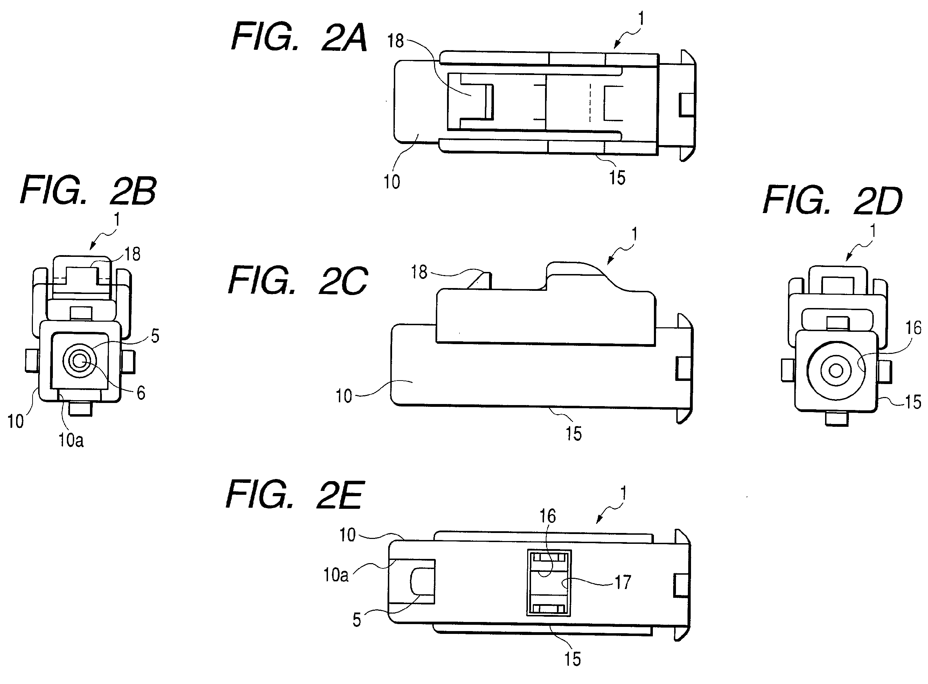

In this first embodiment, the notch 10a is formed in a lower wall of the protective hood portion 10 of a substantially square tubular shape (having a substantially square cross-section), the notch 10a having a width slightly smaller than a width of the protective hood portion 10. This notch 10a has such a size that the distal end portion of the ferrule portion 5 is exposed to the exterior of the protective hood portion 10 through this notch 10a, and therefore the distal end portion of the ferrule portion 5 can be observed through the notch 10a from the side of the protective hood portion (see Fig. 2E).

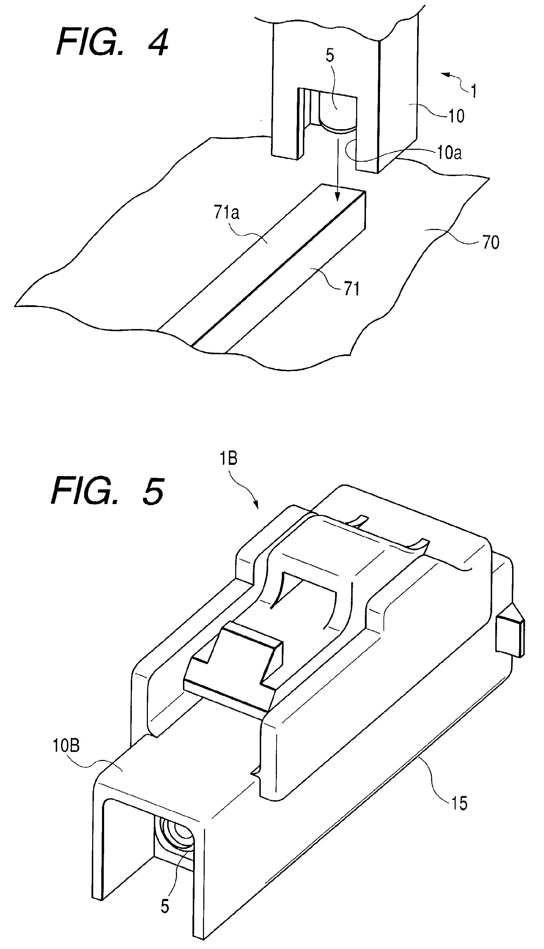

In the optical connector 1 of this construction, the operation for processing the end surface of the optical fiber 61 (received and held in the ferrule portion 5) into a specular surface can be effected, for example, by the use of an end surface-processing apparatus (as shown in Fig. 4) according to the following procedure.

In this end surface-processing apparatus, a specular processing member 71 of a narrow, elongate square pillar-like shape is placed and fixed on a heating plate 70 heated by a heater (not shown). This specular processing member 71 is smaller in width than the notch 10a, and an upper surface of this member 71 is formed into a specular surface 71a. The exposed end portion of the optical fiber 61 at the end portion of the optical fiber cord 60 is inserted into the ferrule portion 5, and the distal end of the optical fiber 61 is slightly projected from the distal end of the ferrule portion 5, and in this condition the specular processing member 71 is received in the protective hood portion 10 through the notch 10a, and the end surface of the optical fiber 61 is pressed into contact with the specular surface 71a of the specular processing member 71. At this time, the distal end of the ferrule portion 5 can be moved toward the specular processing member 71, using the notch 10a as a yardstick, and the above press-contacting operation can be effected while viewing the positional relation between the distal end of the ferrule portion 5 and the specular processing member 71 through the notch 10a. As a result, the end surface of the optical fiber 61, projecting from the distal end of the ferrule portion 5, is pressed against the specular surface 71a, and is fused to be subjected to the specular processing.

In the optical connector 1 of the above construction, the ferrule portion 5 and the protective hood portion 10 are both formed integrally with the housing body portion 15, and therefore the number of the component parts, as well as the time and labor required for the assembling operation, can be reduced as compared with the conventional construction in which the ferrule and the protective hood are separate from each other. Therefore, the production of the optical connector is easy.

The protective hood portion 10 has a substantially square tubular shape, and extends beyond the distal end of the ferrule portion 5 in surrounding relation thereto, and the notch 10a, through which the distal end portion of the ferrule portion 5 can be observed from the side, is formed in the distal end portion of the protective hood portion 10. Therefore, the end surface of the optical fiber 61 at the end of the ferrule portion 5 can be sufficiently protected as compared with the conventional construction in which the distal end portion of the ferrule projects beyond the distal end of the protective hood.

And besides, the notch 10a is formed in the protective hood portion 10, and therefore the specular processing operation can be easily effected, utilizing the notch 10a, for example, while viewing the positional relation between the distal end portion of the ferrule portion 5 and the predetermined specular processing member 71 through the notch 10a.

In addition, after the specular processing operation, the condition of the distal end portion of the ferrule portion 5 (for example, the projection and recession of the optical fiber 61 relative to the distal end of the ferrule portion 5, a distortion, a flaw and a crack of the optical fiber 61, and so on) can be easily inspected by observing the ferrule portion 5 from the side through the notch 10a. Therefore, the defective optical connector 1 can be found and removed.

In this first embodiment, the notch 10a is formed in the lower wall of the protective hood portion 10, and when this optical connector is connected to the mating optical connector 50 mounted on a predetermined mounting board 55 as shown in Fig. 3, the notch 10a faces this mounting board 55. With this construction, the following advantage is obtained.

When connecting this optical connector 1 to the mating optical connector 50, the distal end surface of the optical fiber 61, received and held in the ferrule portion 5, need to be optically coupled to the light-receiving surface or the light-emitting surface of the photoelectric conversion element D. In this optical connector 1, however, the distal end of the ferrule portion 5 is disposed in a sequestered position within the protective hood portion 10, and therefore if the notch 10a is not formed, there are occasions when the photoelectric conversion element D can not be received in the protective hood portion 10 because of the size and shape of this photoelectric conversion element D. In this case, a predetermined light-conducting member need to be interposed between the photoelectric conversion element D (disposed outwardly of the open end of the protective hood portion 10) and the distal end of the ferrule portion 5 (disposed within the protective hood portion 10) so as to optically couple the two together, and therefore there is a fear that the optical connector 50 becomes complicated in construction. In this optical connector 1, however, the notch 10a is formed in the protective hood portion 10, and therefore the photoelectric conversion element D can be received in the protective hood portion 10, and can be disposed near to the end surface of the optical fiber 61 in such a manner that part of this element D projects outwardly from the interior of the protective hood portion 10, and therefore the two can be directly optically coupled together, and there is achieved an advantage that the optical connector 50 can be simplified in construction.

### (Modifications of the First Embodiment)

In this optical connector 1, the notch 10a, formed in the protective hood portion 10, is not limited to the shape shown in Figs. 1 to 4, but can have any other suitable shape in so far as the above conditions are satisfied for the substantially-tubular ferrule portion 5.

Modified examples of the protective hood portion 10 will be described below. In the following description, those constituent elements, identical to those of the first embodiment, will be designated by identical reference numerals, respectively, and explanation thereof will be omitted, and different portions of the constituent element, that is, modified portions of the protective hood portion 10, will be mainly described.

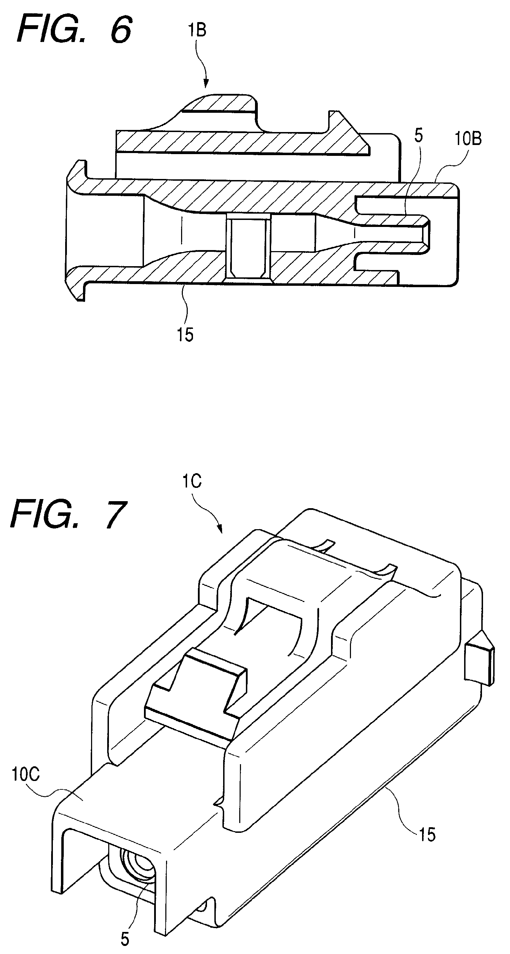

In a first modified optical connector 1B shown in Figs. 5 and 6, a protective hood portion 10B is formed into a substantially square tubular shape, having a substantially square cross-section, and surrounds a ferrule portion 5, and a notch is formed in a lower wall of the protective hood portion 10 over an entire width thereof, with opposite side walls and an upper wall thereof remaining intact.

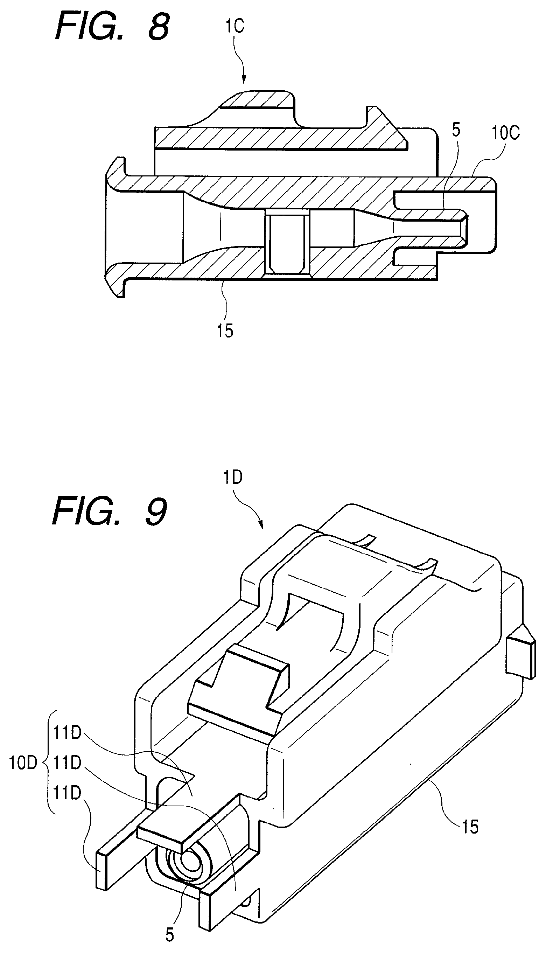

In a second modified optical connector 1C shown in Figs. 7 and 8, a protective hood portion 10C is formed into a substantially square tubular shape, having a substantially square cross-section, and surrounds a ferrule portion 5, and a notch is formed in a lower wall of the protective hood portion 10C over an entire width thereof, and also is formed in lower portions of opposite side walls of this protective hood portion 10C.

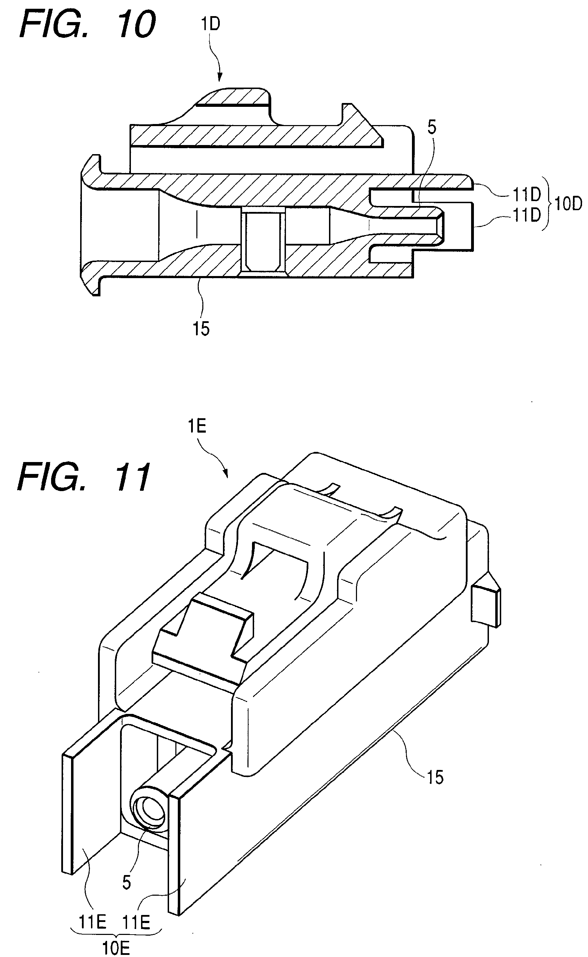

In a third modified optical connector 1D shown in Figs. 9 and 10, a protective hood portion 10D is formed into a substantially square tubular shape, having a substantially square cross-section, and surrounds a ferrule portion 5, and a notch is formed in a lower wall of the protective hood portion 10D over an entire width thereof, and also is formed in lower portions of opposite side walls of this protective hood portion 10D, and further notches are formed respectively in upper corner portions of opposite side walls of the protective hood portion 10D. Namely, this protective hood portion 10D is formed by three extension piece portions 11D extending respectively from opposite side walls and an upper wall of a housing body portion 15 toward the distal end thereof, and these extension piece portions 11D surround the ferrule portion 5 from three directions, that is, from the right, left and upper sides of the ferrule portion 5, and are disposed at predetermined intervals.

In a fourth modified optical connector 1E shown in Fig. 11, a protective hood portion 10E is formed into a substantially square tubular shape, having a substantially square cross-section, and surrounds a ferrule portion 5, and a notch is formed in an upper wall of the protective hood portion 10E over an entire width thereof while another notch is formed in a lower wall thereof over an entire width thereof. Namely, the protective hood portion 10E is formed by a pair of extension piece portions 11E extending respectively from opposite side walls of a housing body portion 15 toward the distal end thereof, and these extension piece portions 11E face each other with the ferrule portion 5 disposed therebetween, and are disposed at a predetermined interval.

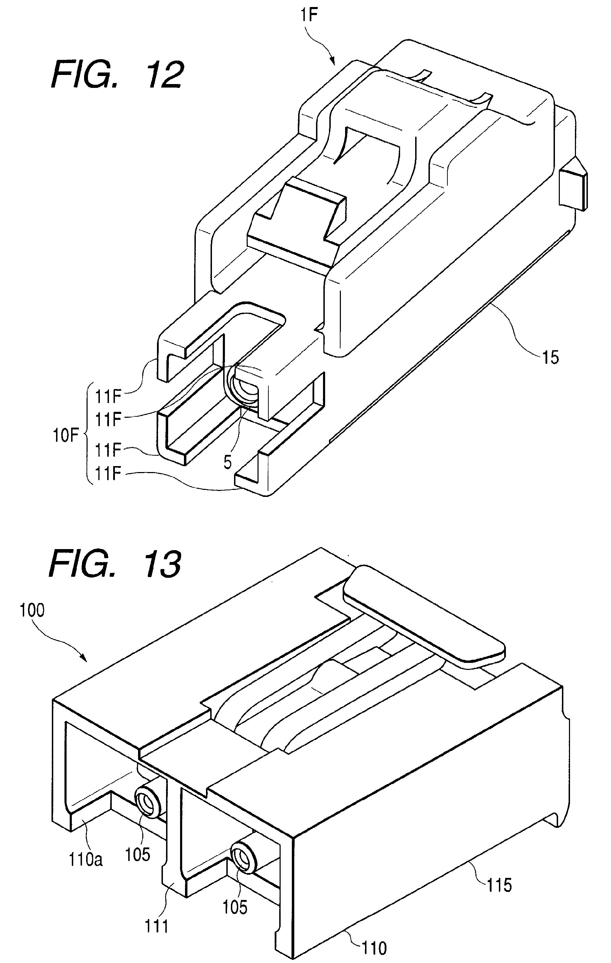

In a fifth modified optical connector 1F shown in Fig. 12, a protective hood portion 10F is formed into a substantially square tubular shape, having a substantially square cross-section, and surrounds a ferrule portion 5, and four notches are formed respectively in widthwise-central portions of opposite side walls and upper and lower walls of this protective hood portion 10F, with four corner portions 11F thereof remaining intact. Namely, this protective hood portion 10F is formed by the four corner portions 11F extending respectively from four corner portion of a front end of a housing body portion 15 toward the distal end thereof.

Particularly in the fourth and fifth modified examples among the above modified examples, the opposed upper and lower walls of the protective hood portion 10E, 10F are notched, and for applying the specular processing to the end surface of the optical fiber 61, the specular processing member 71 of a narrow, elongate square pillar-like shape is fitted in the two notches in such a manner that this specular processing member 71 is firmly held against the end surface of the optical fiber 61, and in this condition the specular processing can be applied to this end surface. Therefore, the positional relation between the specular processing member 71 and the end surface of the optical fiber 61 can be easily kept constant.

In the fifth modified example, the upper, lower and opposite side walls of the protective hood portion 10F are notched, and when the specular processing member 71 is to be held against the end surface of the optical fiber 61, the positional relation between the two can be viewed also from the opposite sides of the protective hood portion 10F, and therefore this specular processing operation can be effected more easily and accurately.

### (Second Embodiment]

Next, a second embodiment of the present invention will be described.

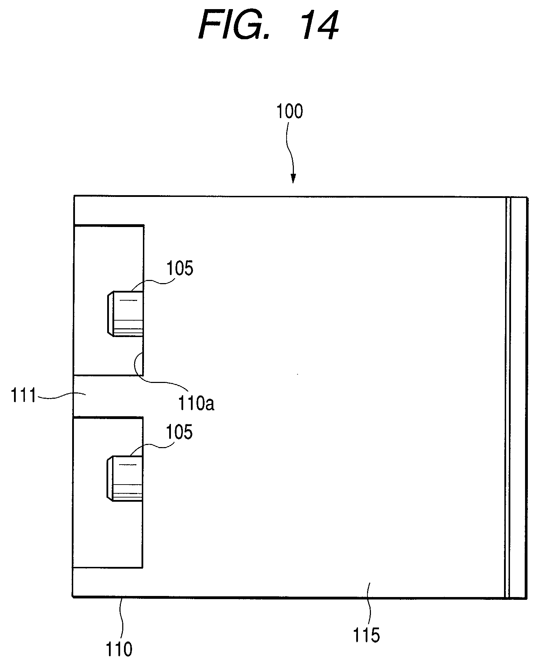

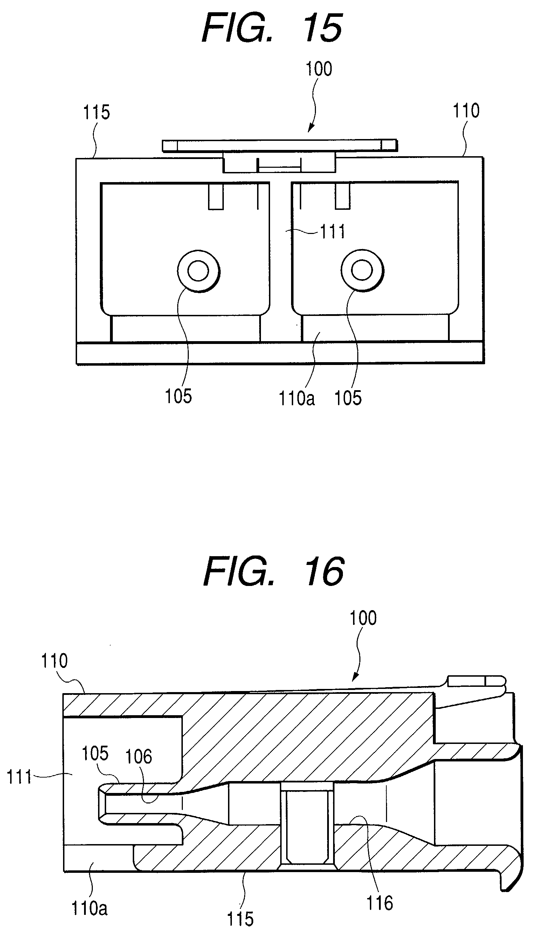

As shown in Figs. 13 to 16, in this optical connector 100, a pair of substantially tubular ferrule portions 105 each for receiving and holding an end portion of an optical fiber 61 are formed integrally with a housing body portion 115 at a front end thereof, and are juxtaposed to each other at a predetermined interval. A protective hood portion 110, surrounding the two ferrule portions 105, is formed integrally with the housing body portion 115 at the front end thereof.

The housing body portion 115 is formed into a substantially flattened, rectangular parallelepiped shape, and two receiving hole portions 116, similar in construction to the receiving hole portion 16 of the first embodiment, are formed in the housing body portion 115, and are juxtaposed to each other at a predetermined interval. As described above for the first embodiment, end portions of optical fiber cords 60 are received and held in these receiving hole portions 116, respectively. When each optical fiber cord 60 is inserted into the corresponding receiving hole portion 116, an end portion of the optical fiber 61, exposed at the end portion of the optical fiber cord 60, is inserted into an optical fiber passage hole 106 (which is formed in the ferrule portion 105, and is disposed on a line of extension of the corresponding receiving hole portion 116), and is received and held in this optical fiber passage hole 106 (see Fig. 3 with respect to the manner of holding the optical fiber cord 60).

In this optical connector 100, the protective hood portion 1.10 of a substantially tubular shape is formed integrally with and projects from the front end of the housing body portion 115 in surrounding relation to the two ferrule portions 105, the protective hood portion 110 projecting beyond the distal ends of the two ferrule portions 105. A notch 110a is formed in the vicinity of the distal end of each ferrule portion 105, and each ferrule portion 105 can be observed through the notch 110a from the side. Preferably, the notch 110a is formed such that when the distal ends of the ferrule portions 105 are pressed toward a flat member, the ferrule portions 105 will not abut against this flat member.

In this second embodiment, the protective hood portion 110 is the form of a substantially square tubular member having a substantially rectangular frame-like shape when viewed from the front side thereof, and surrounds the pair of ferrule portions 105, and the notch 110a is formed in a lower wall of this protective hood portion 110. The protective hood portion 110 can have any other suitable shape as described above for the first embodiment.

In this second embodiment, the protective hood portion 110 is thus formed in surrounding relation to the plurality of ferrule portions 105, and therefore the protective hood portion 110 has an increased internal space, so that the finger or others can easily intrude into the protective hood portion 110 to damage the end surface of the optical fiber 61 received in each ferrule portion 105 within this protective hood portion 110. Therefore, in this second embodiment, a partition wall 111, separating the two ferrule portions 105 from each other, is formed integrally with the housing body portion 115 so as to make the fingers or others less liable to intrude into the protective hood portion 110, thereby sufficiently protecting the end surfaces of the optical fibers 61. This partition wall 111 functions also to reinforce the protective hood portion 110.

In this optical connector 100 of the second embodiment, also, for the same reasons as described above for the first embodiment, the production thereof is easy, and the specular processing operation at the end of each ferrule portion 105 can be effected easily, and besides the end surface of the optical fiber 61 at the end of the ferrule portion 105 can be sufficiently protected.

Although this second embodiment described above is directed to the type having the two ferrule portions 105, the invention can be applied also to the type having three or more ferrule portions.

### (Modification of the Second Embodiment)

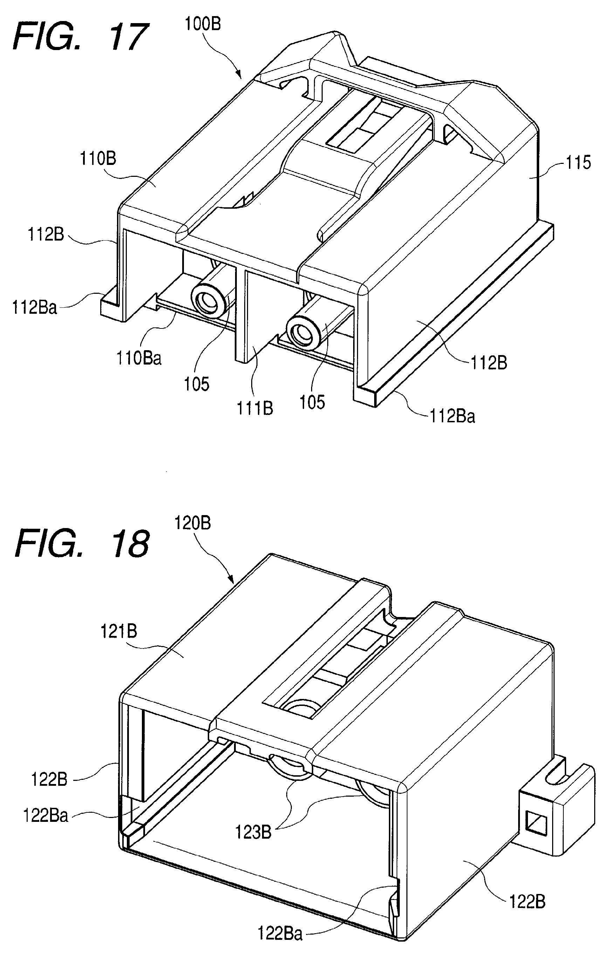

A modified example of the optical connector 100 of the second embodiment will be described with reference to Figs. 17 and 18. The differences from the optical connector 100 will be mainly described, and those constituent elements, identical to those of the optical connector 100, will be designated by identical reference numerals, respectively, and explanation thereof will be omitted.

This optical connector 100B is adapted to be fitted in and connected to a mating optical connector 120B (see Fig. 18), and outwardly-projecting, elongate projections 112Ba are formed respectively at those portions of a protective hood portion 110B, respectively defining opposite side edges of a notch 110Ba, and extend in a direction of insertion of the optical connector 100B into the mating optical connector 120B.

Namely, in this embodiment, the protective hood portion 110B surrounds two ferrule portions 105, and the notch 110Ba is formed in a lower wall of this protective hood portion 100B over an entire width thereof and also in lower ends of opposite side walls 112B thereof and a lower end of a partition wall 111B.

The outwardly-projecting, narrow elongate projections 112Ba are formed respectively on outer surfaces of the opposite side walls at the lower ends thereof, and extend respectively along these lower ends (which extend in the direction of insertion of the optical connector 100B into the mating optical connector 120B).

The mating optical connector 120B includes a housing portion 121B for fitting on the optical connector 100B, and a pair of photoelectric conversion elements (light-emitting elements or light-receiving elements) are contained in this housing portion 121B, and ferrule guide portions 123B for guiding the ferrule portions 105 respectively toward these photoelectric conversion elements are formed within the housing portion 121B. When the optical connector 100B is fitted into the housing portion 121B to be connected to the mating optical connector 120B, the ferrule portions 105 are guided respectively toward the photoelectric conversion elements (contained in the housing portion) by the ferrule guide portions 123B, so that optical fibers, held in the optical connector 100B, are optically coupled respectively to the photoelectric conversion elements contained in the optical connector 120B.

Positioning guide channel-shaped recess portions 122Ba each in the form of an elongate groove are formed respectively in inner surfaces of opposite side walls 122B of the housing portion 121B of the optical connector 120B, and extend in the direction of connection of the optical connector 100B, and the elongate projections 112Ba can be slidably inserted into these channel-shaped recess portions 122Ba.

For connecting the optical connector 100B to the optical connector 120B in an inserted manner, the elongate projections 112Ba are slidably inserted respectively into the positioning guide channel-shaped recess portions 122Ba, thereby guiding the insertion of the optical connector 100B into the optical connector. 120B. The optical connector 100B has a non-rotation-symmetrical shape (when viewed from the front side thereof) because of the formation of the elongate projections 112Ba, and therefore at this time the optical connector 100B is prevented, for example, from being inserted upside down into the optical connector 120B, thus preventing the wrong insertion of the optical connector 100B into the optical connector 120B. Then, when the optical connector 100B is completely inserted into and connected to the optical connector 120B, the elongate projections 112Ba are engaged in the positioning guide channel-shaped recess portions 122Ba, respectively, thereby preventing the rattling of the optical connectors 100B and 120B relative to each other, and therefore an optical misalignment of each optical fiber (received in the optical connector 100B) with the corresponding photoelectric conversion element in the optical connector 120B is prevented.

In this modified optical connector 100B of the above construction, the outwardly-projecting, elongate projections 112Ba are formed respectively at those portions of the protective hood portion 110B, respectively defining the opposite side edges of the notch 110Ba, and extend in the direction of insertion of the optical connector 100B into the mating optical connector 120B. Therefore, the elongate projections 112Ba serve as reinforcing portions at the opposite side edges of the notch 110Ba, and prevent the chipping of the protective hood portion 110B at the opposite side edges of the notch 110Ba, for example, when connecting the optical connector 100B to the optical connector 120B in an inserted manner.

Preferably, elongate projections are formed at the opposite side edges of the notch in each of the protective hood portions 10, 10B, 10C, 10D, 10E and 10F of the first embodiment and its modified examples.

As was described above, in the optical connector of the present invention, the substantially tubular ferrule portion for receiving and holding the end portion of the optical fiber is formed integrally with and projects from the housing body portion, and also the protective hood portion is formed integrally with the housing body portion. Therefore, the production of the optical connector can be effected easily. This protective hood portion has a substantially tubular shape, and this substantially tubular projective hood portion is formed integrally with and projects from the housing body portion in surrounding relation to the ferrule portion, and extends beyond the distal end of the ferrule portion, and the notch, through which the distal end portion of the ferrule portion can be observed from the side, is formed in the distal end portion of the protective hood portion. Therefore, the end surface of the optical fiber at the distal end of the ferrule portion can be sufficiently protected by the protective hood portion. And besides, since the notch is formed in the protective hood portion, the positional relation between the distal end portion of the ferrule portion and the predetermined specular processing member can be viewed through this notch, and thus the specular processing operation can be effected utilizing this notch, and therefore this specular processing operation can be easily carried out.

Also, according to the present invention, since the notch is formed into such a shape as to satisfy such conditions that when the flat member is pressed toward the distal end of the ferrule portion at any angle, this flat member will not abut against the ferrule portion, the end surface of the optical fiber at the distal end of the ferrule portion can be sufficiently protected more positively.

Further, according to the present invention, since the protective hood portion is formed into a substantially square tubular shape, and the opposed two side walls of the protective hood portion are notched, the specular processing operation can be effected utilizing the notches, formed respectively in the opposed side walls, and therefore this specular processing operation can be carried out more easily.

Still further, according to the present invention, since the protective hood portion is formed into a substantially square tubular shape, and the four side walls of the protective hood portion are notched with four corner portions thereof remaining intact, the specular processing operation can be effected utilizing the notches, formed respectively in the four side walls, and therefore this specular processing operation can be carried out more easily.

Yet still further, according to the present invention, the plurality of substantially tubular ferrule portions for respectively receiving and holding the end portions of the optical fibers are formed integrally with the housing body portion, and also the protective hood portion is formed integrally with the housing body portion. Therefore, the production of this optical connector can be effected easily. This protective hood portion has a substantially tubular shape, and is formed integrally with and projects from the housing body portion in surrounding relation to the plurality of ferrule portions, and extends beyond the distal ends of the ferrule portions, and the notch, through which the distal end portions of the ferrule portions can be observed from the side, is formed in the distal end portion of the protective hood portion. Therefore, the end surfaces of the optical fibers at the distal ends of the ferrule portions can be sufficiently protected by the protective hood portion. And besides, since the notch is formed in the protective hood portion, the positional relation between the distal end portion of each ferrule portion and the predetermined specular processing member can be viewed through this notch, and thus the specular processing operation can be effected utilizing this notch, and therefore this specular processing operation can be easily carried out.

Yet still further, according to the present invention, when the protective hood portion is thus formed in surrounding relation to the plurality of ferrule portions, the protective hood portion has the increased internal space, so that the finger or others can easily intrude into the protective hood portion. Therefore, the partition wall, separating the two ferrule portions from each other, is formed integrally with the housing body portion so as to prevent the fingers or others from intruding into the protective hood portion, thereby more sufficiently protecting the end surfaces of the optical fibers.

Yet still further, according to the present invention, the notch is formed in that side wall of the protective hood portion which is to be opposed to the mounting board, having the mating optical connector mounted thereon, when the optical connector is connected to the mating optical connector. In this case, the photoelectric conversion element, contained in the mating optical connector, can be disposed in opposed relation to the ferrule portion within the protective hood portion in such a manner that part of this photoelectric conversion element projects outwardly from the interior of the protective hood portion through the notch, and therefore there is achieved an advantage that the optical fiber, received in the ferrule portion, can be optically coupled directly to the photoelectric conversion element.

Yet still further, according to the present invention, the outwardly-projecting, elongate projections are formed respectively at those portions of the protective hood portion, respectively defining the opposite side edges of the notch, and extend in the direction of insertion of the optical connector into the mating optical connector. In this case, the chipping of the protective hood portion at the opposite side edges of the notch is prevented.

## Claims

1. An optical connector, comprising:
a housing body portion;
a substantially tubular ferrule portion adapted to receive and hold an end portion of an optical fiber and integrated with and projecting from said housing body portion; and
a protective hood portion of a substantially tubular shape integrated with and projecting from said housing body portion to surround said ferrule portion and to extend beyond a distal end of said ferrule portion;
wherein a notch through which the distal end portion of said ferrule portion is observable from a side of said protective hood portion is formed in a distal end portion of said protective hood portion.

2. The optical connector according to claim 1, wherein said notch is so shaped as to satisfy a conduction that when a flat member is pressed toward the distal end of said ferrule portion at any angle, said flat member will not abut against said ferrule portion.

3. The optical connector according to claim 1 or claim 2, wherein said protective hood portion is formed into a substantially square tubular shape, and one side wall of said protective hood portion is notched.

4. The optical connector according to claim 1, wherein said protective hood portion is formed into a substantially square tubular shape, and opposed two side walls of said protective hood portion are notched.

5. The optical connector according to claim 1, wherein said protective hood portion is formed into a substantially square tubular shape, and four side walls of said protective hood portion except for four corner portions are notched.

6. An optical connector, comprising:
a housing body portion;
a plurality of substantially tubular ferrule portions, each being integrated with said housing body portion for receiving and holding an end portion of an optical fiber;
a protective hood portion of a substantially tubular shape integrated with and projecting from said housing body portion so as to surround said plurality of ferrule portions; and extending beyond distal ends of said ferrule portions;
wherein a notch, through which the distal end portions of said ferrule portions can be observed from the side, is formed in a distal end portion of said protective hood portion.

7. The optical connector according to claim 6, wherein a partition wall is integrated with said housing body portion, and separates said ferrule portions from each other.

8. The optical connector according to claim 1, wherein said optical connector is adapted to be connected to a mating optical connector which contains a photoelectric conversion element, and is mounted on a predetermined mounting board, and at least that side wall of said protective hood portion, which is to be opposed to said mounting board when said optical connector is connected to said mating optical connector, is notched.

9. The optical connector according to claim 1, wherein said optical connector is adapted to be fitted in a mating optical connector, and outwardly-projecting, elongate projections are formed respectively at those portions of said protective hood portion, respectively defining opposite side edges of said notch, and extend in a direction of insertion of said optical connector into said mating optical connector.

10. The optical connector according to claim 6, wherein said optical connector is adapted to be connected to a mating optical connector which contains a photoelectric conversion element, and is mounted on a predetermined mounting board, and at least that side wall of said protective hood portion, which is to be opposed to said mounting board when said optical connector is connected to said mating optical connector, is notched.

11. The optical connector according to claim 6, wherein said optical connector is adapted to be fitted in a mating optical connector, and outwardly-projecting, elongate projections are formed respectively at those portions of said protective hood portion, respectively defining opposite side edges of said notch, and extend in a direction of insertion of said optical connector into said mating optical connector.
